# EUROPEAN PATENT APPLICATION

(11) **EP 2 503 297 A2**
(43) Date of publication of application: **26.09.2012**
(21) Application number: 12159193.7
(22) Date of filing: 13.03.2012
(51) Int. Cl.: G01D 4/00

(54) **User acknowledgement device in electronic utility meter**

(30) Priority: 21.03.2011 US 201113052183
(71) Applicant: General Electric Company, Schenectady, NY 12345 (US)
(72) Inventor: Ree, Bradley Richard, Atlanta, GA Georgia 30339 (US); Manoosingh, Lane Leslie, Atlanta, GA Georgia 30339 (US)
(74) Representative: Cleary, Fidelma

(57) **Abstract**

An electronic utility meter including a metering circuit (114,214); a switch (112,212) operatively coupled to the metering circuit for switching the metering circuit between different states; a cover (118,318,418) enclosing the metering circuit and switch; a sensor (222,322,422) enclosed within the cover coupled to the switch, the sensor configured to change a state of the switch in response to a user interaction with the cover.

## Description

### BACKGROUND OF THE INVENTION

This invention relates generally to electronic utility meters and more particularly to a user acknowledgement device in an electronic utility meter.

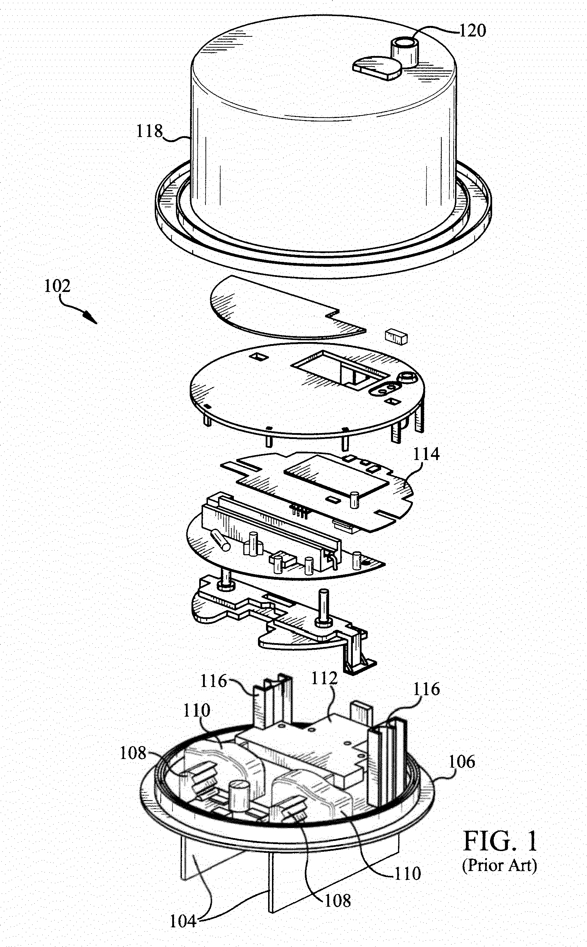

Referring to FIG. 1, a perspective view, of a known electronic utility meter 102 is shown. Electronic utility meter 102 is used to measure usage of a utility, for example, electricity, gas or water. Electronic utility meter 102 illustrated in FIG. 1 is a known electronic watt-hour meter and may include terminal blades 104, a meter base 106, potential links 108, current transformers 110, a switch 112, a metering circuit 114 supported by metering circuit brackets 116, and a cover 118 to protect components.

A user may order utility service but not know when the utility service should be started. This may include ordering utility service for buildings, for example residential or commercial structures, under construction or being purchased. Turning on the utility service before it is needed may present a danger, unnecessary use of utilities, or other such problems. To accommodate utility service orders without turning the utility service on, electronic utility meter 102 may include switch 112. In one approach, the utility company may activate switch 112 from an off position to an armed position. Utility company may activate switch 112 using, for example, a radio signal. However, any known method for activating switch may be used. In another approach as shown on FIG. 1, when the user would like the utility service turned on, the user pushes a user button 120 that is provided on an exterior of the cover 118 which mechanically interacts with and activates switch 112 from the armed position to an on position. To prevent damage to the electronic utility meter 102, user button 120 typically requires protection from the elements. Challenges related to this approach are that user button 120 may be susceptible to, for example, turning on utility service unintentionally and/or may be subject to tampering by people other than the user.

### SUMMARY OF THE INVENTION

In a first aspect, the invention resides in a device comprising a metering circuit for metering a utility service; a switch operatively coupled to the metering circuit for switching the metering circuit between different states; a cover enclosing the metering circuit and switch; a sensor enclosed within the cover coupled to the switch, the sensor configured to change a state of the switch in response to a user interaction with the cover.

In a second aspect, the invention resides in an electronic utility meter, comprising the above device.

### BRIEF DESCRIPTION OF THE DRAWINGS

Embodiments of the present invention will now be described, by way of example only, with reference to the accompanying drawings in which:
FIG. 1 shows a perspective view of a known electronic utility meter.
FIG. 2 shows a simplified cross-section side view of one embodiment of a electronic utility meter in accordance with the invention.
FIG. 3 shows a simplified cross-section side view of one embodiment of a electronic utility meter in accordance with the invention.
FIG. 4 shows a simplified cross-section side view of one embodiment of a electronic utility meter in accordance with the invention.
FIG. 5 shows a simplified cross-section side view of one embodiment of a electronic utility meter in accordance with the invention.

It is noted that the drawings of the invention are not to scale. The drawings are intended to depict only typical aspects of the invention, and therefore should not be considered as limiting the scope of the invention. In the drawings, like numbering represents like elements between the drawings.

### DETAILED DESCRIPTION

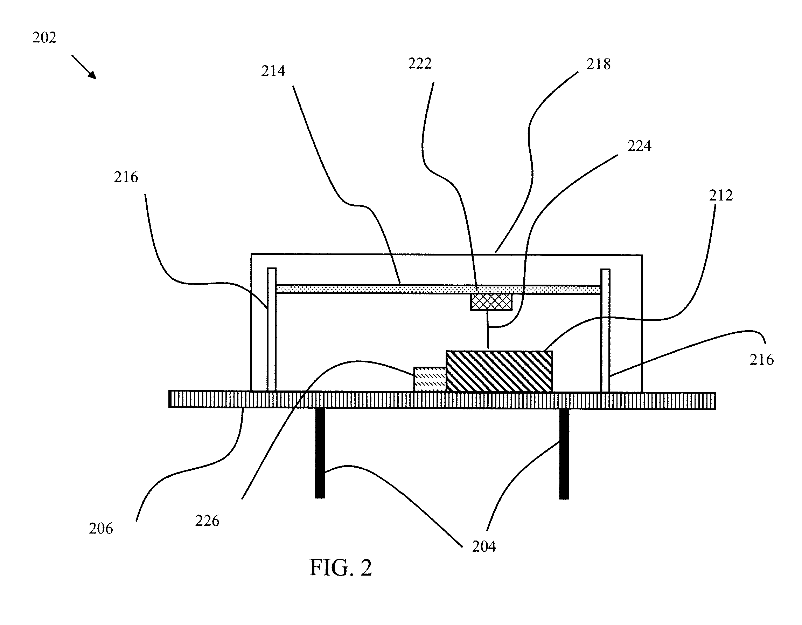

Referring to FIGS. 2-4, simplified cross-section side views of three embodiments of electronic utility meter 202, 302, 402 in accordance with the invention are shown. The teachings of the invention relative to electronic utility meter 202, 302, 402 may be used for any type of utility, e.g., water, gas, electric. For purposes of brevity, however, the teachings of the invention are shown in an electrical supply setting only. Electronic utility meter 202, 302, 402 may include terminal blades 204, a meter base 206, a switch 212, a metering circuit 214, and metering circuit brackets 216. Switch 212 may be operatively coupled to metering circuit 214 through meter base 206 and metering circuit brackets 216. As understood, switch 212 may be activated to switch metering circuit 214 between different states. Different states of metering circuit 214 may include, for example, an off position, an armed position, and an on position. Switch 212 may include a manual switch and/or a remote disconnect switch. In terms of the latter embodiment, switch 212 may include a receiver 226 for receiving instructions for changing from the off position to the armed position. Instructions may be sent via, for example, radio signals, via wires, or by any other known means of communication.

Referring to FIG. 2, a simplified cross-section side view of one embodiment of electronic utility meter 202 including sensor 222 in accordance with the invention is shown. A connector 224 may operatively connect sensor 222 to switch 212. Connector 224 may be any now known or to be developed device for transmitting a signal, for example, a wire.

Sensor 222 may be configured to change the state of the switch 212 in response to a user interaction with a cover 218. For example, as more fully described herein, a user may, for example, touch or tap cover 218 to activate sensor 222. In contrast to conventional devices, sensor 222 does not require a user to interact with a mechanical device external to cover 218 in order to change the state of the switch 212. Sensor 222 is completely enclosed within cover 218. In contrast to conventional devices, sensor 222 is protected from the elements and objects external to the meter thus increasing safety and security of electronic utility meter. 202. In this embodiment, sensor 222 includes a microelectromechanical systems (MEMS) accelerometer. MEMS accelerometers are designed to sense physical movement. Accordingly, sensor 222 may sense physical movement associated with the electronic utility meter 202. Sensor 222 may be programmed, for example, to sense a predetermined tapping pattern of a user physically interacting with cover 218. For example, a user may receive instructions (by any known means) to activate electronic utility meter 202 with three successive taps of a finger to cover 218. Any number of taps by user and any combination or pattern of taps by user may be used including one tap. Cover 218 may include metal, glass, plastic, or any other material.

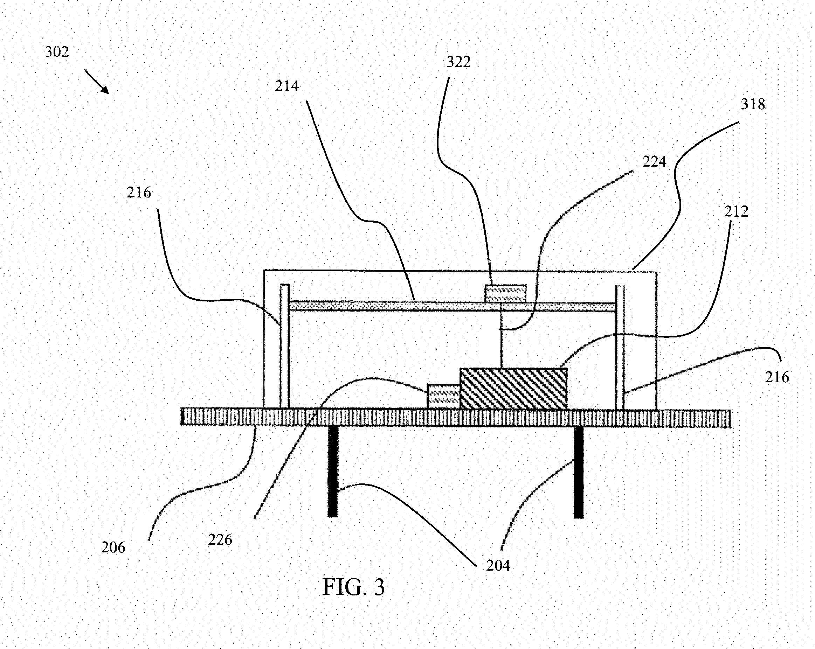

Referring to FIG. 3, a simplified cross-section side view of one embodiment of electronic utility meter 302 including sensor 322 as applied to FIG. 2 in accordance with the invention is shown. In this embodiment, sensor 322 includes a capacitance sensor. Capacitance sensors are designed to measure changes in electrical properties between two materials with a space between them. Thus, a hand (or any part of body) or other object in close proximity to a capacitance sensor creates a measurable change in capacitance that can be used to trigger switch 112. Accordingly, sensor 322 may sense a user touching part of their body, for example, a finger, to cover 318 of electronic utility meter 302. Cover 218 may include metal, glass, plastic, or any other material.

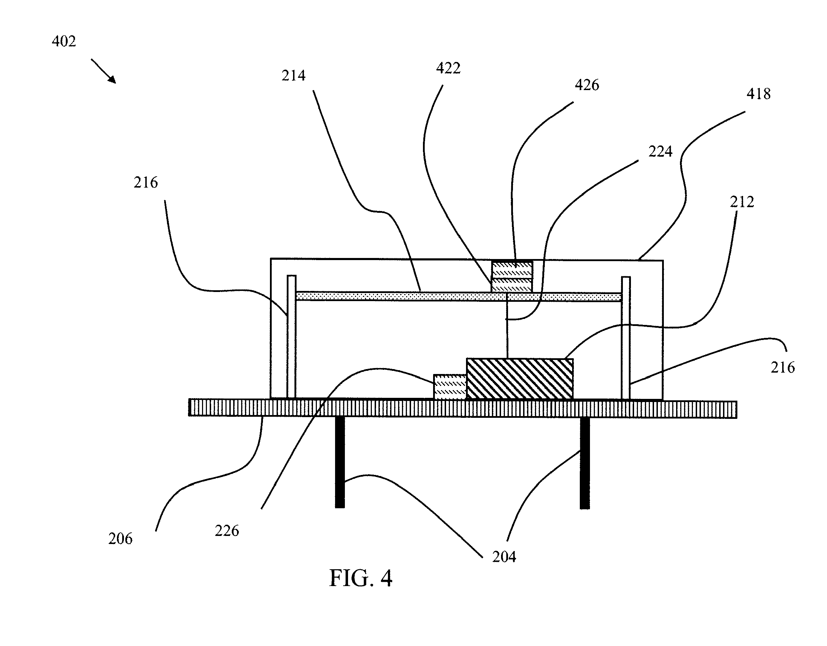

Referring to FIG. 4, a simplified cross-section side view of one embodiment of electronic utility meter 402 including sensor 422 and cover 418 as applied to FIG. 2 in accordance with the invention is shown. In this embodiment, sensor 422 includes an inductive sensor. In this case, electronic utility meter 402 may include a dielectric 426 located between sensor 422 and cover 418. Inductive sensors are designed to sense the completion of an inductive loop. Accordingly, sensor 422 may sense when a user completes the inductive loop with the electronic utility meter 402 by touching cover 418 with part of their body in proximity to dielectric 426. In this case, cover 418 may include, for example, metal and other conductive material - the conductive material closing the loop with the inductive sensor.

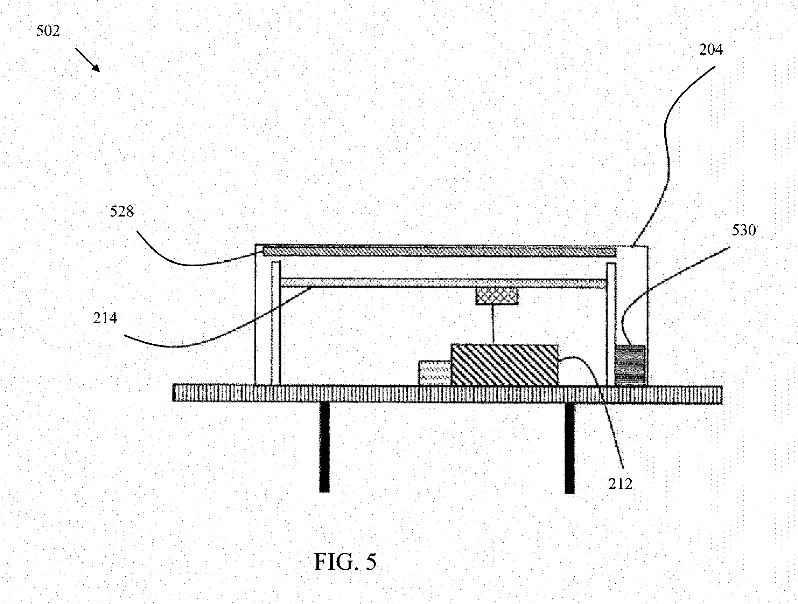

Referring to FIG. 5, a cross-section side view of one embodiment of electronic utility meter 502 in accordance with the invention is shown. As applied to FIG. 2, electronic utility meter 502 may include a user interface 528 on or within cover 218 providing a location for a user to communicate with sensor 222. For example, user interface 528 may be on either side of cover 218. Alternatively, if cover 218, for example, is transparent, e.g., glass or translucent plastic, user interface 528 may be embedded in cover 218 Instructions for user may be included on cover 218 or on user interface 528. User interface 528 may include a display such as a light emitting diode (LED) display. LED display may provide information to user in the form of visual symbols, letters, numerals, colors, and other modes of visual communication. For example, instructions for user, status of metering circuit 214, and status of switch 212 may be displayed on user interface 528.

Electronic utility meter 502 may also include an audio device 530. Audio device 530 may provide information to user in the form of tones, words, and other modes of aural communication. Information may include status of switch 212, for example, off, armed, or on; instructions to user on activating switch 212, for example, switching from armed to on; and readings from the electronic utility meter 502 concerning, for example, utility usage. While shown as applied to FIG. 2, it will be readily recognized that the features described for electronic utility meter 502 could also be applied to FIGS. 3 and 4 embodiments.

A person with ordinary skill in the art will readily recognize that electronic utility meter 202, 302, 402, 502 may include many include more than one sensor 222, 322, 422 and that more than one sensor 222, 322, 422 may include different combinations of MEMS accelerometer, capacitance sensor, and inductive sensor.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

This written description uses examples to disclose the invention, including the best mode, and also to enable any person skilled in the art to practice the invention, including making and using any devices or systems and performing any incorporated methods. The patentable scope of the invention is defmed by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A device (102, 202, 302, 402, 502), comprising:
a metering circuit (114, 214) for metering a utility service;
a switch (112, 212) operatively coupled to the metering circuit (114, 214) for switching the metering circuit (114, 214) between different states;
a cover (118, 318, 418) enclosing the metering circuit (114, 214) and switch (112, 212);
a sensor (222, 322, 422) enclosed within the cover (118, 318, 418) coupled to the switch (112, 212), the sensor (222, 322, 422) configured to change a state of the switch (112, 212) in response to a user interaction with the cover (118, 318, 418).

2. An electronic utility meter comprising the device of claim 1.

3. The electronic utility meter (102, 202, 302, 402, 502) of claim 2, wherein the sensor (222, 322, 422) includes a microelectromechanical systems (MEMS) accelerometer.

4. The electronic utility meter (102, 202, 302, 402, 502) of claim 3, wherein the MEMS accelerometer is programmed to sense a predetermined tapping pattern of the user on the cover (118, 318, 418).

5. The device of claim 4, wherein the cover (116, 318, 418) includes at least one of plastic and metal.

6. The electronic utility meter (102, 202, 302, 402, 502) of claim 2, wherein the sensor (222, 322, 422) includes an inductive sensor.

7. The device of claim 6, wherein the cover (118, 318, 418) includes a metal and further comprises:
a dielectric (426) between the inductive sensor (402) and the cover (418).

8. The electronic utility meter (102, 202, 302, 402, 502) of claim 2, wherein the sensor (222, 322, 422) includes a capacitance sensor.

9. The electronic utility meter (102, 202, 302, 402, 502) of any preceding claim, wherein the switch (112, 212) includes a remote disconnect switch (112, 212) with an off position, an armed position, and an on position.

10. The electronic utility meter (102, 202, 302, 402, 502) of claim 9, wherein the remote disconnect switch (112, 212) includes a receiver (226) for receiving instructions for changing from the off position to the armed position.

11. The electronic utility meter (102, 202, 302, 402, 502) of any preceding claim, further comprising a user interface (528) positioned on the cover (118, 318, 418).

12. The electronic utility meter (102, 202, 302, 402, 502) of claim 11, wherein the user interface (528) includes a light emitting diode (LED) display.

13. The electronic utility meter (102, 202, 302, 402, 502) of claim 13, wherein the LED display includes at least one of instructions to the user, status of the switch (112, 212) to the user, and a utility usage information.

14. The electronic utility meter of any preceding claim, further comprising:
an audio device (530) for transmitting at least one of an instruction to the user and a status of the switch (112, 212) to the user.
